# EUROPÄISCHE PATENTANMELDUNG

(11) **EP 0 698 469 A2**
(43) Veröffentlichungstag der Anmeldung: **28.02.1996**
(21) Anmeldenummer: 95112981.6
(22) Anmeldetag: 17.08.1995
(51) Int. Cl.: B29C 47/00, B29C 47/34

(54) **Verfahren und Einzugsvorrichtung für Dichtprofile**

(30) Priorität: 17.08.1994 DE 4429091
(71) Anmelder: THYSSEN POLYMER GMBH, D-81671 München (DE)
(72) Erfinder: Laske, Peter, D-94237 Bogen (DE)

(57) **Zusammenfassung**

Die Erfindung betrifft ein Verfahren und eine Einzugvorrichtung für Dichtprofile (1,2) vorzugsweise in Nuten (3a,3b) in Kunststoffprofiles (3) wie sie für die Herstellung von Fenstern, Türen, Rahmen oder dergl. eingesetzt werden, wobei Zuführungseinrichtungen die Dichtprofile (1,2) in für diese vorgesehene Nuten (3a,3b) in den Kunststoffprofilen (3) nach deren Extrusion einfädeln.

## Beschreibung

Die Erfindung bezieht sich auf ein Verfahren zum Einzug von Dichtprofilen in Nuten extrudierter Kunststoffprofile, wie sie für die Herstellung von Fenstern, Türen, Rahmen oder dergl. eingesetzt werden, sowie eine Vorrichtung zur Durchführung des Verfahrens.

Fensterprofile, Türprofile usw. müssen gegen eindringendes Regenwasser abgedichtet werden. Dazu sind bereits bei der Fertigung solcher Profile Nuten für das Einsetzen von streifenförmigen Dichtungen eingearbeitet. Das Einsetzen der Dichtungen erfolgt spätestens bei der Tür- bzw. Fenstermontage regelmäßig von Hand. Dies ist äußerst zeit- und kostenaufwendig.

Der Erfindung, wie sie in den Ansprüchen beschrieben ist, liegt daher die Aufgabe zugrunde, eine Vorrichtung zu besitzen mit der das Einführen der Dichtungen in die Nuten maschinell vorgenommen wird.

Der mit der Erfindung erzielte Vorteil liegt insbesondere in der schnellen, einfachen, genauen und fehlerfreien Einziehung der streifenförmigen Dichtungen in die dafür vorgesehenen Nuten der Profile. Ein weiterer Vorteil der erfindungsgemäßen Vorrichtung liegt in deren Variabilität, womit eine Anpassung an unterschiedliche Extrusionsbedingungen, Profilkonstruktionen und Dichtprofile problemlos möglich ist.

Die Erfindung ist nachstehend anhand eines in den Abbildungen dargestellten Ausführungsbeispieles näher erläutert.

Es zeigt:

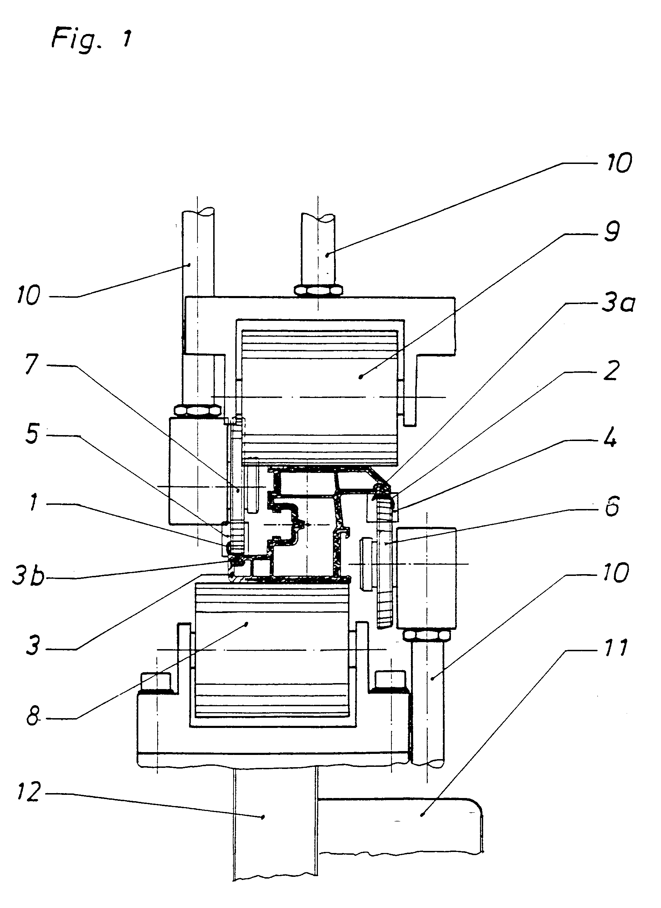

- Fig. 1: eine Vorderansicht der erfindungsgemässen Vorrichtung und
- Fig. 2: eine Seitenansicht derselben.

Die in den Abbildungen dargestellte Vorrichtung zum Einfügen von Dichtungsprofilen 1 und 2 in dafür vorgesehene Längsnuten 3a und 3b eines Profiles 3, (beispielsweise Fensterprofil aus Kunststoff) besteht im wesentlichen aus den beiden Führungsdüsen 4 und 5 für die Dichtungsprofile 1 und 2, je einem zugeordneten Andruckrad 6 bzw. 7 sowie einer Führungsrolle 8 und einer Andruckrolle 9 für das Profil 3. Mit 10 sind Pneumatikzylinder bezeichnet und mit 11 die Steuereinheit für die Vorrichtung. Eine aus Profilen zusammengebaute Halteeinrichtung ist variabel ausgebildet, sodaß sie den jeweiligen Bedürfnissen angepasst werden kann.

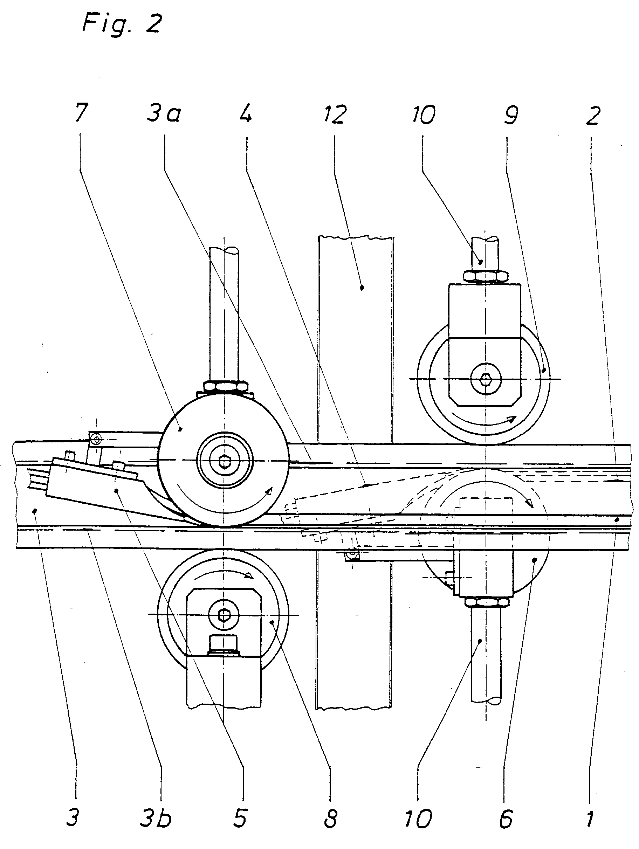

Die Funktionsabläufe der Vorrichtung sind dabei wie folgt:
Ein Profil 3, beispielsweise Kunststoff-Fenster-Profil durchläuft nach dem Extrusionsvorgang die erfindungsgemäß vorgeschlagene Vorrichtung, wie in Fig. 2 dargestellt, von links nach rechts. Die Vorrichtung beinhaltet keine Vortriebsmittel. Das Profil 3 wird dabei vom in den Abbildungen nicht dargestellten Extruder abgezogen und beim Durchlauf der Vorrichtung mit aus den Düsen 4 und 5 in die Nuten 3a und 3b eingefügten Dichtungsprofilen 1 und 2 ausgestattet. Die aus den Düsen 4 und 5 kommenden Dichtungsprofile 1 und 2 werden dabei durch ihnen zugeordnete Andruckräder 6 bzw. 7 in die Nuten 3a und b des Fensterprofiles 3 gedrückt. Dabei unterstützt die Führungsrolle 8 und die Andruckrolle 9 das Fensterprofil 3 beim Durchlauf durch die Vorrichtung. Die Führungsrolle 8 ist dabei unterhalb des Andruckrades 7 und das Andruckrad 6 unterhalb Andruckrolle 9 angeordnet.

Der notwendige Anpressdruck wird von den über die Steuerung 11 gesteuerten Pneumatikzylindern 10 aufrecht erhalten.

Nach dem Durchlauf durch die Vorrichtung wird das fertig konfektionierte Fensterprofil 3 zusammen mit den in die Nuten 3a und 3b eingefügten Dichtungsprofilen 1 und 2 auf die erforderliche Länge geschnitten und verladen.

Anstelle eines Fensterprofiles kann mit der vorgeschlagenen Vorrichtung auch ein Türprofil oder ein Kabelkanal-Halbrohr-Profil etc. mit streifenförmigen Dichtungsprofilen bestückt werden. Der Querschnitt des Dichtungsprofils ist ohne Einfluß auf die Funktionsfähigkeit der Vorrichtung. Eine Anpassung der Führungsdüsen und sonstiger Teile der Vorrichtung ist dabei ohne weiteres möglilch. Auch der Werkstoff des Fensters oder dergl. Profiles sowie des Dichtungsprofiles kann je nach Bedarf frei gewählt werden, z.B. beliebige Kunststoffe, Aluminium oder sonstige metallische Werkstoffe oder Holz können mit Dichtungsprofilen über die Vorrichtung ausgestattet werden.

### STÜCKLISTE

- 1: Dichtungsprofil
- 2: Dichtungsprofil
- 3: Fensterprofil
- 3a: Längsnut
- 3b: Längsnut
- 4: Führungsdüse
- 5: Führungsdüse
- 6: Andruckrad
- 7: Andruckrad
- 8: Führungsrolle
- 9: Andruckrolle
- 10: Pneumatikzylinder
- 11: Steuerung
- 12: Halteeinrichtung

## Patentansprüche

1. Verfahren zum Einzug von Dichtprofilen in Nuten extrudierter Profile, beispielsweise Kunststoffprofile, wie sie für die Herstellung von Fenstern, Türen, Rahmen, Rohrhalbschalen oder dergl. eingesetzt werden, **dadurch gekennzeichnet,** daß ein Profil (3) nach seiner Extrusion im noch thermoelastischen Zustand zwischen je einer antriebslosen Führungsrolle (8) und einer Andruckrolle (9) hindurchgezogen wird und dabei über ein oder mehrere über eine Führungsdüse (4,5) Dichtungsprofile (1,2) in die dafür vorgesehenen Aufnahmenuten (3a,3b) des Profiles (3) während dessen Vorbeilaufen unter den Führungsdüsen (4,5) eingebracht werden.

2. Einzugsvorrichtung für die Durchführung des Verfahrens nach Anspruch 1, **dadurch gekennzeichnet,** daß mindestens eine als Widerlager für das Profil (3) ausgebildete Führungsrolle (8) unterhalb und mindestens eine oberhalb des Profiles (3) angeordnete Andruckrolle (9) vorgesehen sind, die beide antriebslos sind und Führungsdüsen (4,5) für den Einzug der Dichtungsprofile (1,2) in die Nuten (3a,3b) des Profiles (3) oberhalb deren Längsnuten (3a,3b) vor Andruckrädern (6,7) angeordnet sind, wobei ein oder mehrere verdrehgesicherte Pneumatikzylinder (10) die das Profil (3) berührenden Teile der Vorrichtung (12) führt und die Andruckkräfte für das Profil (3), die Hubbewegungen, Funktionsabläufe über eine Steuerungseinheit (11) überwach- und steuerbar sind.

3. Vorrichtung nach Anspruch 2, **dadurch gekennzeichnet,** daß die Führungsrollen (8) und die Andruckrollen (9) mit einer weichen Schutzschicht belegt sind.

4. Vorrichtung nach Anspruch 2 und 3, **dadurch gekennzeichnet** daß die Vorrichtung (12) als variables Profilsystem aufgebaut ist.

5. Vorrichtung nach Anspruch zwei bis 4, **dadurch gekennzeichnet,** daß die für den Einzug eines Dichtungsprofiles (1,2) erforderlichen Teile, wie Führungsdüsen (4,5) und Andruckräder (6,7) zu einer austauschbaren Einheit zusammengefasst sind.
